# EUROPÄISCHE PATENTSCHRIFT

(11) **EP 0 999 396 B1**
(45) Veröffentlichungstag und Bekanntmachung des Hinweises auf die Patenterteilung: **19.06.2002**
(21) Anmeldenummer: 99121605.2
(22) Anmeldetag: 01.11.1999
(51) Int. Cl.: F16L 11/127, F16L 11/12

(54) **Elektrisch leitfähiger Schlauch**
Electrically conductive hose
Tuyau souple électro conducteur

(30) Priorität: 04.11.1998 DE 19850637
(43) Veröffentlichungstag der Anmeldung: 10.05.2000
(73) Patentinhaber: ContiTech Schlauch GmbH, 30165 Hannover (DE)
(72) Erfinder: Rossmann, Jörg, 34537 Bad Wildungen (DE)

(56) Entgegenhaltungen:
- DE-A- 2 944 858
- DE-A- 3 202 854

## Beschreibung

Die Erfindung betrifft einen elektrisch leitfähigen Schlauch gemäß dem Oberbegriff des Patentanspruchs 1.

Solche Schläuche, die insbesondere zur Weiterleitung brennbarer oder explosibler Fluide eingesetzt werden, sind beispielsweise aus der DE-PS 947127 und der DE-OS 24 20 753 bekannt und haben sich in verschiedenen Ausführungsformen und Ausgestaltungen in einer Vielzahl von speziellen Anwendungsbereichen bewährt, in denen der Einsatz metallischer Leiter in den Schlauchwandungen unerwünscht oder wegen der Gefahr der Funkenbildung nicht zulässig ist. Dabei ist insbesondere die Funktionssicherheit dieser Schlauchgattung bezüglich der Ableitung elektrischer Ladungen hervorzuheben, die wesentlich darauf beruht, daß für die Stromleitung sowohl in axialer als auch in radialer Richtung praktisch der gesamte Materialquerschnitt der Schlauchwandung zur Verfügung steht und nicht nur diskrete Leiter, die brechen oder durch verschiedene Außeneinwirkungen unterbrochen werden können.

Allerdings wiesen die vorbekannten leitfähigen Schläuche der genannten Gattung den Nachteil auf, daß sie sich nur einheitlich schwarz herstellen ließen, wenn mit geringstmöglichen Kosten eine hohe elektrische Leitfähigkeit erzielt werden sollte, weil dies praktisch nur durch Beimengung von leitfähigem Ruß realisierbar war.

In einer Variante der vorstehend beschriebenen vorbekannten leitfähigen Schläuche wurde nicht die gesamte elastomere Schlauchwandung durch Beimenung leitender Partikel - insbesondere Ruß - leitfähig gemacht, sondern lediglich Querschnitts- und/oder Längsschnittsbereiche der Schlauchwandung wurden - mehr oder weniger durchgängig - aus leitfähig gemachten Elastomeren gebildet. Obwohl sich auch mit diesen Ausführungsformen, die beispielsweise in DE-GM 79 34 101 und DE-OS 32 02 854 beschrieben sind, gute Ergebnisse erzielen ließen, konnten sie sich wegen verhältnismäßig hoher Herstellungskosten nicht durchsetzen.

Es stellte sich daher die Aufgabe, einen elektrisch leitfähigen Schlauch zu entwickeln, der bei einer - beispielsweise mit dem Gegenstand der o.a. DE-PS 947127 vergleichbaren hohen Leitfähigkeit und kostengünstigen Herstellung dennoch eine überwiegend helle und/oder farbige Außenfläche aufwies, um insbesondere auch Forderungen nach farbigen Verwendungs-Kennzeichnungen und/oder ästhetischen farblichen Gestaltungen der Außenfläche der Schläuche nachkommen zu können.

Erfindungsgemäß wird diese Aufgabe durch einen Schlauch der eingangs genannten Gattung gelöst, der die im kennzeichnenden Teil des Patentanspruchs 1 genannten Merkmale aufweist. In den Unteransprüchen sind bevorzugte Ausführungsformen derartiger Schläuche sowie ein Verfahren zu ihrer Herstellung angegeben.

Ein besonderer Vorteil der erfindungsgemäßen Lösung der gestellten Aufgabe ergibt sich aus der Tatsache, daß sie keine neuen oder zusätzlichen Produktionsvorrichtungen erfordert, sondern grundsätzlich mit den konventionellen Vorrichtungen realisierbar ist, die in einem größeren einschlägigen Produktionsbetrieb ohnehin auch zur Herstellung anderer Schläuche - z.B. konventioneller elektrisch leitfähiger Schläuche gemäß DE-PS 947127 - benötigt werden und zur Verfügung stehen. Ferner ist hervorzuheben, daß auch die Verfahrens- und Materialkosten für das Aufbringen der dünnen farbigen Schlauchmantel-Außenschicht im Vergleich zur Herstellung konventioneller rußfarbig-schwarzer leitfähiger Schläuche kaum ins Gewicht fallen.

Trotzdem schafft die Erfindung einen elektrisch hochleitfähigen Schlauch, der alle an ein derartiges Produkt zu stellenden Forderungen in hervorragender Weise erfüllt. Durch die praktisch mit ihrem gesamten Material-Querschnitt als elektrischer Leiter zur Verfügung stehende - insbesondere durch eingemengten Ruß - leitfähig gemachte und gegebenenfalls homogen tiefschwarz durchgefärbte Schlauchwandung werden elektrische Ladungen ohne die Gefahr dabei auftretender Strom- oder Spannungsspitzen zuverlässig weitergeleitet, und über die von der weniger leitfähigen Schlauchmantel-Außenschicht nicht überdeckten, also freibleibenden Teilbereiche findet der erfindungsgemäße Schlauch in jeder Lage großflächigen elektrischen Kontakt zum Untergrund sowie zu den angeschlossenen Schlaucharmaturen, so daß die störenden elektrischen Ladungen sicher und vollständig abgeleitet werden.

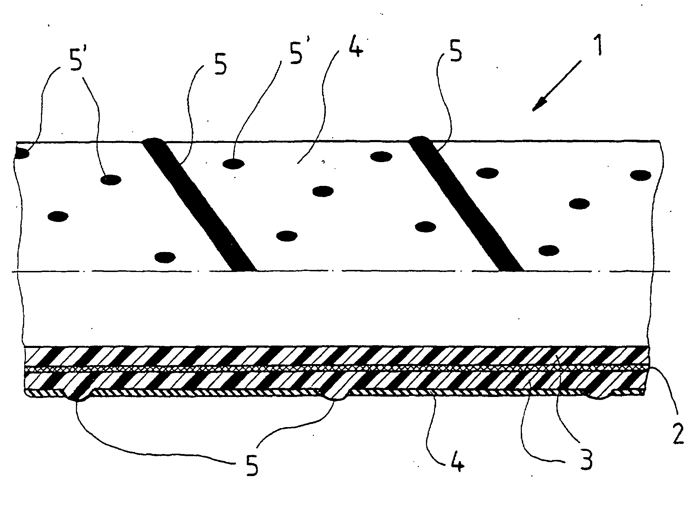

Die beigefügte Zeichnung zeigt einen erfindungsgemäßen Schlauch in schematischer Darstellung, und zwar in der oberen Hälfte in einer Seitenansicht und in der unteren Hälfte im Längsschnitt:

Der dargestellte erfindungsgemäße Schlauch 1 weist eine zweischichtige Wandung 3 aus mit leitfähigen Partikeln - insbesondere Ruß - hochleitfähig gefüllten Elastomeren auf, in die in üblicher Weise Verstärkungseinlagen 2 - vorzugsweise in Form textiler Geflechte - eingebettet sind. Die Außenfläche der Wandung 3 ist zum weit überwiegenden Teil mit einer dünnen Außenschicht 4 abgedeckt, die in Form eines wendelig aufgebrachten Folienstreifens erzeugt ist und nur schmale streifenförmige Teilbereiche 5 unbedeckt läßt, in denen das hochleitfähige Material der Wandung 3 freiliegt. Alternativ oder zusätzlich können von der Außenschicht 4 unbedeckte Teilbereiche 5' auch dadurch erzeugt werden, daß die Außenschicht 4 entsprechende kleinflächige Ausnehmungen aufweist.

Wenn man die Außenschicht 4 im Transferverfahren auf die Wandung 3 aufbringt, sie also auf einer Trägerfolie auf die Wandung 3 appliziert, diese Trägerfolie während der Vulkanisation auf dem Schlauch beläßt und sie erst anschließend abzieht, kann man erreichen, daß das hochleitfähige rußhaltige elastomere Material der Wandung 3 in den unbedeckten Teilbereichen 5 die Oberfläche der Außenschicht 4 geringfügig - nämlich um die Schichtdicke der Transferfolie - radial nach außen überragt. Hierdurch kann der elektrische Kontakt zwischen der elektrisch hochleitfähigen Schlauchwandung 3 und der jeweiligen Unterlage des Schlauches - insbesondere dem Erdboden - zusätzlich verbessert werden.

Zusammenfassend ist festzustellen, daß die Erfindung einen elektrisch hochleitfähigen Schlauchschaft und dessen Herstellung ermöglicht, der jegliche Freiheit bezüglich der farblichen Gestaltung der Schlauchoberfläche elektrisch hochleitfähiger Schläuche bietet und dabei die bei derartigen Schläuchen geforderten Durchgangs- und Oberflächenwiderstände sicher und äußerst kostengünstig realisiert.

Im Vergleich zu den bisher verfügbaren Möglichkeiten, nichtschwarze - also helltönige oder farbige - elektrisch leitende Schläuche herzustellen, eröffnet die vorliegende Erfindung einen weitaus kostengünstigeren und gleichzeitig äußerst effektiven Weg zur Schaffung hochqualitativer, zuverlässiger Schläuche dieser Art.

## Patentansprüche

1. Elektrisch leitfähiger Schlauch (1) mit einer im wesentlichen aus Elastomeren gebildeten, durch Beimengung elektrisch leitender Partikel hochleitfähigen, gegebenenfalls Verstärkungseinlagen (2) enthaltenden Wandung (3),
**dadurch gekennzeichnet,**
**daß** er eine dünne stoffschlüssig mit der Schlauchwandung (3) verbundene Schlauchmantel-Außenschicht (4) geringerer Leitfähigkeit aufweist, die die hochleitfähige Wandung (3) bis auf mindestens einen freibleibenden geringen Teilbereich (5,5') überdeckt und die zur Oberfläche der hochleitfähigen Schlauchwandung (3) farblich konstrastiert.

2. Schlauch nach Anspruch 1, **dadurch gekennzeichnet, daß** die Außenschicht (4) aus Polymer-, insbesondere Elastomer-Streifen gebildet ist, die wendelig oder in Richtung der Schlauchlängsachse mit schmalen Abständen zwischen ihren Längsrändern angeordnet sind, wobei durch diese schmalen Abstände ein wendelig verlaufender unbedeckt bleibender Teilbereich (5) gebildet ist.

3. Schlauch nach Anspruch 1 oder 2, **dadurch gekennzeichnet, daß** die Außenschicht (4) kleine Ausnehmungen aufweist, durch die unbedeckt bleibende Teilbereiche (5') gebildet sind.

4. Schlauch nach einem der Ansprüche 1 bis 3, **dadurch gekennzeichnet, daß** der Flächenanteil der unbedeckt bleibenden Teilbereiche (5,5') an der gesamten Schlauchmantelfläche insgesamt weniger als 10 % beträgt.

5. Schlauch nach einem der Ansprüche 1 bis 4, **dadurch gekennzeichnet, daß** die Außenschicht (4) eine Schichtdicke von 0,1 bis 0,5 mm aufweist.

6. Schlauch nach einem der Ansprüche 1 bis 5, **dadurch gekennzeichnet, daß** der hochleitfähige Werkstoff der Schlauchwandung (3) die Außenschicht (4) in den nicht überdeckten Teilbereichen (5, 5') radial nach außen überragt.

7. Verfahren zum Herstellen eines elektrisch leitfähigen Schlauches, wobei zunächst in an sich bekannter Weise ein Schlauchrohling gebildet wird, dessen Wandung aus Elastomeren und gegebenenfalls Verstärkungseinlagen gebildet ist und durch Beimengung elektrisch leitender Partikel - wie Ruß - durchgängig eine hohe elektrische Leitfähigkeit aufweist und der anschließend mit einer dünnen polymeren Außenschicht versehen und mit dieser vulkanisiert und stoffschlüssig verbunden wird,
**dadurch gekennzeichnet, daß** die Außenschicht (4) in Form von gewendelt oder axial verlaufenden Streifen aufgebracht wird, die farblich zur Oberfläche der hochleitfähigen Wandung (3) des Schlauchrohlings kontrastieren und die hochleitfähige Schlauchwandung (3) bis auf freibleibende Teilbereiche (5, 5') überdecken.

8. Verfahren nach Anspruch 7, **dadurch gekennzeichnet, daß** die Außenschicht (4) im Transferverfahren auf einer Trägerfolie auf die Wandung (3) des Schlauchrohlngs aufgebracht und die Trägerfolie nach der Vulkanisation des Schlauches abgezogen wird.

## Claims

1. Electrically conductive hose (1), having a wall (3) which is substantially formed from elastomeric materials, said wall being highly conductive as a result of the addition of electrically conductive particles and possibly including reinforcing members (2), **characterised in that** said hose has a thin outer hose casing layer (4) of lower conductivity, which is materially joined to the hose wall (3) and covers the highly conductive wall (3) apart from at least one small partial region (5, 5') which remains free, said outer layer contrasting in colour with the surface of the highly conductive hose wall (3).

2. Hose according to claim 1, **characterised in that** the outer layer (4) is formed from polymeric strips, more especially elastomeric strips, which are disposed in a helical manner or in the direction of the longitudinal axis of the hose with narrow spacings between their longitudinal edges, a partial region (5), which extends helically and remains uncovered, being formed by said narrow spacings.

3. Hose according to claim 1 or 2, **characterised in that** the outer layer (4) has small recesses, by means of which partial regions (5'), which remain uncovered, are formed.

4. Hose according to one of claims 1 to 3, **characterised in that** the area of the partial regions (5, 5'), which remain uncovered, on the entire hose surface is generally less than 10 %.

5. Hose according to one of claims 1 to 4, **characterised in that** the outer layer (4) has a layer thickness of 0.1 to 0.5 mm.

6. Hose according to one of claims 1 to 5, **characterised in that** the highly conductive material of the hose wall (3) protrudes radially outwardly beyond the outer layer (4) in the non-covered partial regions (5, 5').

7. Method of producing an electrically conductive hose, wherein a hose blank is initially formed in a manner known per se, the wall of which blank is formed from elastomeric materials, and possibly reinforcing members, and continuously has a high electrical conductivity by the addition of electrically conductive particles - such as carbon black- , and which blank is subsequently provided with a thin polymeric outer layer, vulcanised with said layer and materially joined thereto, **characterised in that** the outer layer (4) is applied in the form of helically configured or axially extending strips which contrast in colour with the surface of the highly conductive wall (3) of the hose blank and cover the highly conductive hose wall (3) apart from partial regions (5, 5') which remain free.

8. Method according to claim 7, **characterised in that**, in the transfer method on a carrier film, the outer layer (4) is applied to the wall (3) of the hose blank, and the carrier film is removed after the hose has been vulcanised.

## Revendications

1. Flexible (1) électroconducteur pourvu d'une paroi (3) formée essentiellement d'élastomères, rendue très conductrice par l'ajout de particules électroconductrices et contenant éventuellement des inserts de renfort (2), **caractérisé en ce qu'**il présente une couche mince extérieure de gaine de flexible (4), liée de matière à la paroi de flexible (3), de conductibilité plus faible, qui recouvre la paroi (3) très conductrice à l'exception d'au moins une petite zone partielle (5, 5') laissée à nu et contraste au niveau de la couleur avec la surface de la paroi de flexible (3) très conductrice.

2. Flexible selon la revendication 1, **caractérisé en ce que** la couche extérieure (4) est formée de bandes de polymère, en particulier de bandes d'élastomère, qui sont disposées en spirale ou dans le sens de l'axe longitudinal du flexible avec de faibles distances entre leurs bords longitudinaux, une zone partielle (5) restant non couverte et agencée en spirale étant formée par ces étroits espacements.

3. Flexible selon la revendication 1 ou 2, **caractérisé en ce que** la couche externe (4) présente de petits évidements qui constituent des zones partielles (5') restant non couvertes.

4. Flexible selon l'une quelconque des revendications 1 à 3, **caractérisé en ce que** la fraction de surface des zones partielles (5, 5') restant non couverte par rapport à la surface globale de la gaine de flexible représente globalement moins de 10%.

5. Flexible selon l'une quelconque des revendications 1 à 4, **caractérisé en ce que** la couche extérieure (4) présente une épaisseur de couche de 0,1 à 0,5 mm.

6. Flexible selon l'une quelconque des revendications 1 à 5, **caractérisé en ce que** le matériau très conducteur de la paroi de flexible (3) dépasse de la couche externe (4), dans les zones partielles (5, 5') non recouvertes, dans le sens radial vers l'extérieur.

7. Procédé pour fabriquer un flexible électroconducteur selon lequel on commence par former de façon connue en soi une ébauche de flexible, dont la paroi est constituée d'élastomères et éventuellement d'inserts de renfort et présente une grande électroconductibilité de façon courante par l'ajout de particules électroconductrices, du noir de carbone par exemple, et qui est pourvue ensuite d'une couche extérieure polymère mince et est liée à celle-ci par vulcanisation et de matière, **caractérisé en ce que** la couche extérieure (4) est appliquée sous la forme de bandes agencées en spirale ou dans le sens axial, qui contrastent au niveau de la couleur avec la surface de la paroi (3) très conductrice de l'ébauche de flexible et recouvrent la paroi de flexible (3) très conductrice à l'exception de zones partielles (5, 5') restées nues.

8. Procédé selon la revendication 7, **caractérisé en ce que** la couche extérieure (4) est appliquée sur la paroi (3) de l'ébauche de flexible par le procédé de transfert en étant sur un film support et le film support est retiré après la vulcanisation du flexible.
